# EUROPEAN PATENT APPLICATION

(11) **EP 4 395 330 A1**
(43) Date of publication of application: **03.07.2024**
(21) Application number: 22217409.6
(22) Date of filing: 30.12.2022
(51) Int. Cl.: H04N 21/236, H04N 21/2365, H04N 21/242

(54) **A DEVICE FOR MERGING TRANSPORT STREAMS**

(71) Applicant: Advanced Digital Broadcast S.A., 1293 Bellevue (CH)
(72) Inventor: BYRTEK, Wojciech, 65-119 Zielona Gora (PL)
(74) Representative: Kancelaria Eupatent.pl Sp. z.o.o

(57) **Abstract**

A device for merging of a plurality of input data transport streams (TSO, TS1, ... TSN) to an output transport stream (TSOUT), the device comprising: a plurality of data processing blocks (111-113), each configured to receive a dedicated input transport stream (TSO, TS1, ... TSN) and to regenerate packets of the transport stream without valid signals and sync signals; a plurality of first-in-first-out (FIFO) buffers (121-123), each connected to an output of a dedicated data processing block (111-113) to receive the regenerated packets, wherein the buffers (121-123) operate with a clock signal frequency (CLK_T0/8, CLK_T1/8, CLK_TN/8) equal to an eighth of the clock signal frequency of the dedicated data processing block (CLK T0, CLK T1, CLK_TN); a transport stream manager (103) configured to collect packets from the buffers (121-123) when the packets are available; and a data formatting block (105) configured to collect the packets from the transport stream manager (103), to generate a sync signal and a valid signal for a merged transport stream and to output the merged transport stream (TSOUT).

## Description

### TECHNICAL FIELD

The present invention relates to the field of processing digital audio video data, in particular to merging transport streams.

### BACKGROUND

In digital television and other audio video applications, data is typically transmitted in a form of transport streams. The format of transport streams is defined e.g., in a standard: MPEG-2 Part 1, Systems, formally known as ISO/IEC standard 13818-1 or ITU-T Rec. H.222.0.

It is often necessary to merge several parallel transport streams into a single stream for an audio/video processor.

There are known systems that allow merging the transport streams with use of a central processing unit (CPU) - however, in such systems, the CPU capabilities may limit the number of transport streams to be merged at a time.

### SUMMARY

There is a need for a dedicated method and device for efficiently merging a plurality of transport streams.

The object of the invention is a device for merging of a plurality of input data transport streams to an output transport stream, the device comprising: a plurality of data processing blocks, each configured to receive a dedicated input transport stream and to regenerate packets of the transport stream without valid signals and sync signals; a plurality of first-in-first-out buffers, each connected to an output of a dedicated data processing block to receive the regenerated packets, wherein the buffers operate with a clock signal frequency equal to an eighth of the clock signal frequency of the dedicated data processing block; a transport stream manager configured to collect packets from the buffers when the packets are available; and a data formatting block configured to collect the packets from the transport stream manager, to generate a sync signal and a valid signal for a merged transport stream and to output the merged transport stream.

The data formatting block can be configured to provide the output transport stream in the following modes: 192-byte packets, 196-byte packets, 200-byte packets and 188-byte no-header packets.

The device may further comprise a dedicated filtering block between each data processing block and buffer configured to filter packets output by each data processing block.

The output transport stream can be generated with a clock being a sum of clocks of input transport streams.

The device may further comprise additional FIFO buffers in parallel to the FIFO buffers configured to store a copy of the packets stored in the FIFO buffers, wherein the data formatting block is configured to generate the output transport stream with a copy of packets having a virtual tuner identifier.

The invention allows efficient combining of a plurality of transport streams. The presented embodiment can be scaled to a dedicated number of transport streams to be merged.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually, these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### BRIEF DESCRIPTION OF DRAWINGS

The present invention will be shown by means of example embodiments on a drawing, wherein:
Fig. 1 shows a first embodiment of the device for merging transport streams;
Fig. 2 shows a procedure of TS data merging;
Fig. 3 shows a second embodiment of the device for merging transport streams.

### DETAILED DESCRIPTION

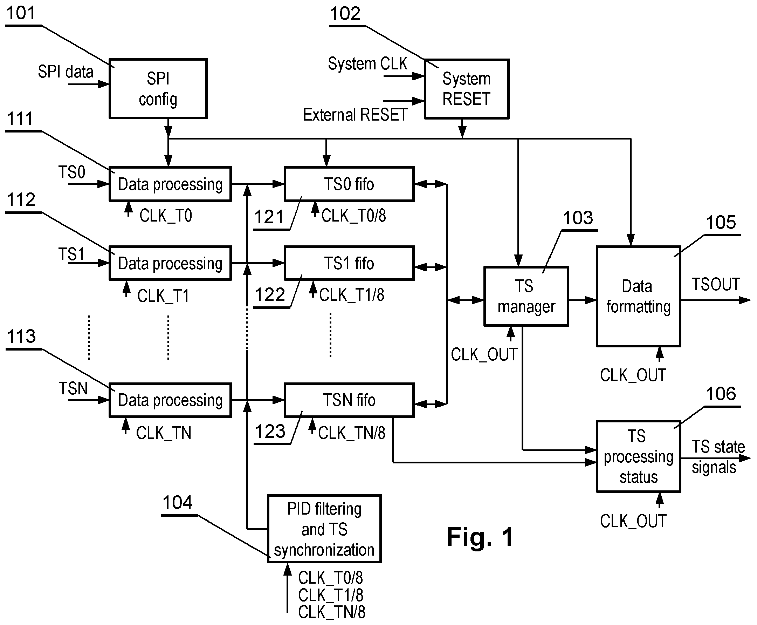

In a basic embodiment, as shown in Fig. 1, the device allows merging of live transport streams. The device receives bits of transport stream TS0, TS1, ... TSN at the data processing blocks 111-113 and synchronizes data to regenerate the stream without the valid and sync signals in a parallel form (e.g., 188 bytes per packet). The device also receives, at a SPI configuration block 101, SPI (Synchronous Parallel Interface) data which define the setup of the device to determine for example whether packets shall have or not have a header, therefore the SPI configuration block may control the other modules of the device. A system reset block 102 receives a system clock and external reset signals in order to define an internal reset signal after a power on of the device and to provide initial configuration of the components of the device (to avoid periods of unstability of the device). The transport stream data, after being processed by the data processing blocks 111-113 are input, via FIFO (first in, first out) buffers 121-123 to a transport stream manager block 103 that collects the data from individual buffers 121-123 to the data formatting block 105.

The data formatting block 105 collects data from the TS manager 103 and generates a sync signal for the merged transport stream (wherein the sync signal can be the sync value + the transport stream identifier), a valid signal, gates the clock and outputs a merged transport stream TSOUT for use by an audio/video processor. The transport streams can be merged by the data formatting block in three modes 192 (188 data bytes + 4-byte header), 196 (188 data bytes + 8-byte header), 200 (188 data bytes + 12-byte header), or with a no-header mode (but with modified sync).

A PID (Packet Identifier) filtering and TS synchronization block 104 is responsible for filtering packets output by each data processing block 111-113 before these packets are input to the buffers 121-123 (in fact, the reference 104 on the drawing represents a plurality of modules, each connected between the corresponding data processing block and buffer: 111-121, 112-122, 113-123, therefore each block 104 is run by a corresponding clock CLK_T0/8, CLK_T1/8, ... , CLK_TN/8). The filtering in block 104 may be used e.g., to discard unnecessary data (such as stuffing packets), to reduce the amount of transmitted data. The TS synchronization in block 104 relates to checking correctness of synchronization packet (e.g., whether the transmitted stream is not corrupted) - if the synchronization is not correct, data can be transmitted to the buffers 121-123, but the packet counter for packets is not updated.

The data processing blocks 111-113 are configured to read the input transport stream data and convert it to a structure to be written to buffers 121-123. The data processing blocks 111-113 may be configured to filter the incoming transport stream data, for example by discarding broken packets, packets with a timing error, or packets indicated by the demodulator.

In order to distinguish the source of the transport stream, each packet is marked with a modified synchronization byte with an added input number from which it originates, or packet is extended with additional identification header.

The device has N + 1 independent "clock domains", namely areas which need to be synchronized, which is realized through the FIFO buffers 121-123.

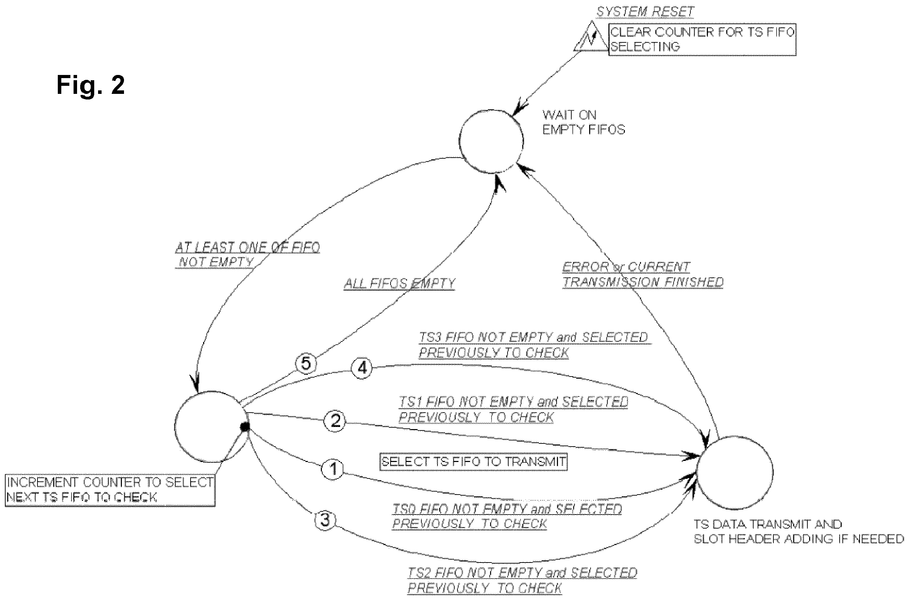

The procedure of operation of the device is shown in Fig. 2. The procedure can be initiated by a system reset - the device generates an internal reset signal with the use of FPGA features that initialize D-type triggers in the '0' state on the output just after programming. It makes possible to generate a pulse with a configurable duration triggered by POWER UP - which means that it does not need an external reset. Initially, the FIFO buffers 121-123 are empty. As the data processing blocks 111-113 receive the transport stream and pass data to the FIFO buffers 121-123, the transport stream manager 103 selects the FIFO buffer 121-123 that is not empty and data is collected from that buffer and passed to be merged into the output transport stream. The transport stream manager 103 allows to search buffers 121-123 effectively in 1 up to N clock cycles. It remembers the buffer 121-123 from which data was previously sent, so the next searching cycle is started coming from the next not empty buffer in the queue. In consequence, the data are sent coherently without any gaps - data for separate packet are sent in one time slot. During the processing of the output transport stream, additional data such as a header can be added thereto.

Preferably, the device is configured to process transport streams according to MPEG 2 standard, but it can be equivalently used with other audio video transport streams.

Various elements of the device use different clock signals. The data processing blocks 111-113 are clocked by the clocks CLK_T0, CLK_T1, CLK_TN of the transport stream they receive (for example, if an 8Mhz QAM 256 signal is received, the clock is 56 MHz). The PID filtering blocks 104 and the FIFO buffers 121-123 are clocked by a clock that is correspondingly 8 times slower (due to 8 bits in a generated word): CLK_T0/8, CLK_T1/8, CLK_TN/8. The other blocks: the TS merger block 103, the data formatting block 105 and the TS processing status block 106 are driven by an output signal clock CLK_OUT that is equal to a sum of clock frequencies of each input clock, namely CLK_OUT = CLK_T0 + CLK_T1 + ... + CLK_TN. This allows optimal use of device resources and allows to implement the device on relatively slow FPGA circuits wherein high clock frequencies are not required for blocks 104, 121-123. Alternatively, a fixed output clock frequency can be set, equal to a sum of maximum predicted clocks of the input signals.

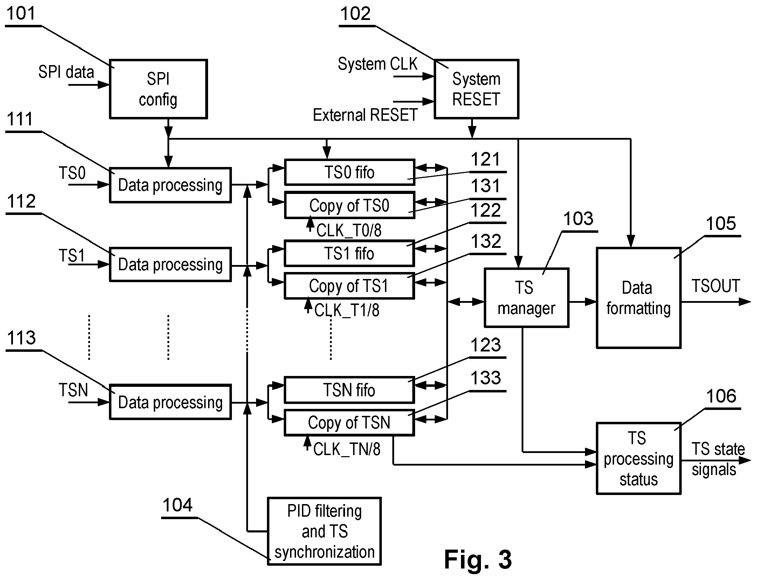

Fig. 3 shows a second embodiment of the device, which further comprises additional buffers 131-133 for storing a copy of the transport streams. These additional buffers 131-133 can be used to generate an additional transport stream with a time shift or recording functionality. This may facilitate simultaneous operations, by the processor, to record and playback two streams. In that case, the additional buffers 131-133 store the same data as buffers 121-123, but with different packet identifiers. In that case, the TS manager module 103 operates with twice higher frequency to generate twice as many packets and the data formatting block 105 generates an output transport stream TSOUT with the main packets and a copy of the packets with a virtual tuner identifier.

The device of Figs. 1 and 3 can be implemented as an FPGA circuit or as an ASIC circuit.

The device is not affected by changes in transmission methods of the transport streams, because the data processing blocks 111-113 are able to process the sync and valid signals and generate packets for buffers 121-123 correspondingly. The presented device can be called as operating by resynchronizing - after receiving the first data byte, it collects following 188 bytes to generate a packet. If 188 bytes are not received correctly, these data are discarded and the data processing block 111-113 awaits a new sync signal to receive correct data.

In case output data stream TSOUT is not transmitted, the CLOCK_OUT signal can be disabled, in order to reduce noise for other circuits.

Since stuffing data is discarded by the data processing blocks 111-113, the output transport stream TSOUT contains less data, i.e., only useful data.

The data formatting block 105 may further implement data swapping technique to change LSB (least significant bit) to MSB (most significant bit) data in order to provide data formatting functionality to make TSOUT stream useful for different systems (depending on configuration of processor input).

The TSOUT signal contains a single continuous frame that contains a series of packets from the input transport stream.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A device for merging of a plurality of input data transport streams (TS0, TS1, ... TSN) to an output transport stream (TSOUT), the device comprising:
- a plurality of data processing blocks (111-113), each configured to receive a dedicated input transport stream (TS0, TS1, ... TSN) and to regenerate packets of the transport stream without valid signals and sync signals;
- a plurality of first-in-first-out (FIFO) buffers (121-123), each connected to an output of a dedicated data processing block (111-113) to receive the regenerated packets, wherein the buffers (121-123) operate with a clock signal frequency (CLK_T0/8, CLK_T1/8, CLK_TN/8) equal to an eighth of the clock signal frequency of the dedicated data processing block (CLK_T0, CLK_T1, CLK_TN);
- a transport stream manager (103) configured to collect packets from the buffers (121-123) when the packets are available; and
- a data formatting block (105) configured to collect the packets from the transport stream manager (103), to generate a sync signal and a valid signal for a merged transport stream and to output the merged transport stream (TSOUT).

2. The device according to claim 1, wherein the data formatting block (105) is configured to provide the output transport stream (TSOUT) in the following modes: 192-byte packets, 196-byte packets, 200-byte packets and 188-byte no-header packets.

3. The device according to any of previous claims, further comprising a dedicated filtering block (104) between each data processing block (111-113) and buffer (121 - 123) configured to filter packets output by each data processing block (111-113).

4. The device according to any of previous claims, wherein the output transport stream (TSOUT) is generated with a clock (CLKOUT) being a sum of clocks of input transport streams (CLK_T0, CLK_T1, CLK_TN).

5. The device according to any of previous claims, further comprising additional FIFO buffers (131-133) in parallel to the FIFO buffers (121-123) configured to store a copy of the packets stored in the FIFO buffers (121-123), wherein the data formatting block (105) is configured to generate the output transport stream (TSOUT) with a copy of packets having a virtual tuner identifier.
